# EUROPEAN PATENT APPLICATION

(11) **EP 4 006 588 A1**
(43) Date of publication of application: **01.06.2022**
(21) Application number: 20210278.6
(22) Date of filing: 27.11.2020
(51) Int. Cl.: G01S 17/89, G01S 7/497

(54) **METHOD AND A PROCESSING UNIT FOR RECONSTRUCTING THE SURFACE TOPOLOGY OF A GROUND SURFACE IN AN ENVIRONMENT OF A MOTOR VEHICLE AND MOTOR VEHICLE COMPRISING SUCH A PROCESSING UNIT**

(71) Applicant: Argo AI GmbH, 80805 München (DE)
(72) Inventor: FERRONI, Francesco, 81379 München (DE); MENASHE, Ohad, 81927 Munich (DE)
(74) Representative: Hofstetter, Schurack & Partner

(57) **Abstract**

The invention is concerned with a method for reconstructing the surface topology of a ground surface (19) in an environment (14) of a motor vehicle (10), wherein the reconstruction is based on scan data (16) of at least one LIDAR sensor (15). A virtual horizontal grid (26) is defined for dividing the environment (14) into distinct grid cells (29). In each grid cell (29), a local tile (31) is defined as a function of coordinates of those measurement points (25) that are contained in the respective grid cell (29). The respective local tile (31) of each individual grid cell (29) is classified as belonging to the ground surface (19) based on reference surface data (35) that identifies the respective local tile (31) of at least one grid cell (29) as a ground surface (19) tile. For at least some grid cells, a respective height value (53) of the measurement points (25) in that grid cell (29) is re-calculated as being the vertical distance of the respective measurement point (25) above the ground surface (19) as it is defined by the identified ground surface (19) tiles.

## Description

The invention is concerned with a method and a processing unit for reconstructing the surface topology of a ground surface in the surroundings or the environment of a motor vehicle. The invention also provides a motor vehicle with such a processing unit.

For an autonomous driving function, ground surface reconstruction is a key perception task which is useful for a number of corollary tasks, such as object detection, lane detection, mapping and planning. For example, in mobile robot applications, a common pipeline for obstacle detection and mapping is to use a LIDAR scan to measure the 3D environment and estimate heights of objects from the ground. In environments with non-flat ground surfaces, the estimation of height at an arbitrary point far away from the robot is non-trivial since LIDAR measurements are taken from the reference point of the robot. Knowing the ground surface is also useful for trajectory planning, and mapping.

This task is not only relevant for mobile robots, but also for vehicles, like autonomously driving vehicles, e.g. passenger vehicles or trucks.

F. Moosmann et al. suggest applying a local convexity criterion to LIDAR data for identifying a ground tile, i.e. a segment that can be assumed to be at ground level (F. Moosmann, O. Pink, and C. Stiller. Segmentation of 3D LIDAR Data in non-flat Urban Environments using a Local Convexity Criterion. In IEEE Intelligent Vehicles Symposium, pages 215-220, 2009).

B. Douillard et al. apply a segmentation algorithm to a point cloud generated by a LIDAR sensor in order to identify parts of the ground surface (Douillard, B.; Underwood, J.; Kuntz, N.; Vlaskine, V.; Quadros, A.; Morton, P.; Frenkel, A. On the Segmentation of 3D LIDAR Point Clouds. In Proceedings of the IEEE International Conference on Robotics and Automation (ICRA), Shanghai, China, 9-13 May 2011; p. 8).

It has proven beneficial to include a-priori knowledge in the detection algorithm for ground surface reconstruction. However, it can be difficult to apply such a-priori knowledge correctly to the available sensor data.

It is an object of the present invention to reconstruct the ground surface geometry on the basis of LIDAR measurement data or scan data in a vehicle.

The object is accomplished by the subject matter of the independent claims. Advantageous developments with convenient and non-trivial further embodiments of the invention are specified in the following description, the dependent claims and the figures.

The invention provides a method for reconstructing the surface topography or surface topology of a ground surface in an environment of a motor vehicle. The reconstruction is based on measurement data or scan data of at least one LIDAR sensor, wherein the scan data describe measurement points of the environment. Each measurement point can describe the 3-dimensional coordinates of a point, where a reflection occurred. The coordinates can be defined in the coordinate system of the sensor.

According to the method, a processing unit performs the following steps:
- a virtual horizontal grid is defined for dividing the environment into distinct grid cells;
- in each grid cell, a local tile or local plane is defined as a function of coordinates of those measurement points that are contained in the respective grid cell using a predefined tile fitting method;
- the respective local tile of each individual grid cell is classified as belonging to the ground surface based on a predefined region growing method that is started based on reference surface data that identifies at least one local tile (of at least one grid cell) as a ground surface tile belonging to the ground surface, wherein the region growing method identifies at least one additional local tile as a ground surface tile;
- for one or some or each of the grid cells, a respective height value of the measurement points in that respective grid cell is re-calculated as being the vertical distance or height of the respective measurement point above the ground surface as it is defined by the identified ground surface tiles.

The horizontal grid subdivides the volume of the environment into volume elements that are delimited in the horizontal directions (x-direction and y-direction). These volume elements are open or unlimited along the vertical direction (z-direction). Volume elements of such shape are also called "stixels" referring to columns or stixels that are standing upright. A stixels are called "grid cell" in the sequel. The measurement points are each positioned in one of these grid cells.

Based on these measurement points of a respective grid cell, the respective local tile is defined in each grid cell, wherein such a tile is a section of a plane or a surface element with a height value or z-coordinate that is determined by the z-coordinates of the respective measurement points in that grid cell. For example, said fitting method for determining that z-coordinate may comprise that the mean value of the z-coordinates of the measurement points in that grid cell is calculated.

Note that in those grid cells that mainly comprise measurement points that originate from reflections at the true ground surface itself (i.e. measurement points of the street level as, for example, the concrete surface of the street), the resulting local tiles define the ground surface.

Then, if at least one such local tile is identified to be on ground level, starting from such a ground surface tile, by comparison other local ties can be identified to have a similar z-coordinate value and that are therefore ground surface tiles, also. For initially identifying one of the local tiles as a ground surface tile, a-priori knowledge may be provided in the form of the reference surface data. From that initial ground surface tile, the region growing method may identify additional ground surface tiles.

All those local tiles that have been identified as ground surface tiles describe the topography of the ground surface, i.e. the shape of the ground surface. In between the ground surface tiles extrapolation allows to describe the topography of the ground surface in such grid cells that do not comprise a ground surface tile.

Once the topography of the ground surface is reconstructed, the z-coordinate of the measurement points can be expressed by their respective height value describing the height of the respective measurement point above the reconstructed ground surface.

The invention provides the advantage that even with a LIDAR sensor that is out of calibration (for example due to a rotational shift of the LIDAR sensor with reference to the body of the car), the topography of the ground surface can be reconstructed on the basis of its measurement points even if those do not comply with the calibration of the sensor coordinate system any more.

The invention also comprises embodiments that provide features which afford additional technical advantages.

One embodiment comprises that the predefined tile fitting method is based on a Least-Mean-Square-Fitting of the z-values of the measurement points contained in the grid cell. Additionally or alternatively, the tile fitting method is based on a RANSAC-algorithm. The RANSAC-algorithm even allows to define a normal vector of the respective local tile on the basis of the measurement points. Implementation details regarding the RANSAC algorithm are available in the prior art.

Like it has been explained above, a-priori knowledge is preferred for identifying at least one initial ground surface tile. One embodiment comprises that said reference surface data identifies the local tile that the vehicle is standing on as a ground surface tile and/or the reference surface data identifies the local tile that is positioned immediately in front of the vehicle as a ground surface tile. In other words, it is assumed that the vehicle itself is standing on the ground surface and/or the closest tile is a ground surface tile. Measurement points very close to the vehicle, for example measurement points at the front of the vehicle, must therefore originate from reflections of the LIDAR beam at the ground surface. A local tile that is derived from these measurement points therefore is a ground surface tile. Tiles adjacent to such a ground surface tile and with a similar z-coordinate or height value similar to that of the ground surface tile can be assumed to be ground surface tiles as well. The "similarity" is defined by the criteria applied by the described region growing method.

Accordingly, one embodiment comprises that the predefined region growing method comprises a height criterion that states that a local tile that is a neighbor of a ground surface tile or that is a next-to-neighbor of a ground surface tile is also a ground surface tile, if an absolute difference value of the height of the local tile and the ground surface tile is less than a predefined height threshold value. The height threshold value can be in the range 0 cm to 20 cm. This will allow to recognize local tiles as ground surface ties even if height difference exists, for example due to a curbstone.

One embodiment comprises that the predefined region growing method comprises a directional criterion that states that a local tile that is a neighbor to a ground surface tile or that is a next-to-neighbor to a ground surface tile is itself also a ground surface tile, if an absolute angle difference of the normal vector of the local tile and the ground surface tile is less than a predefined angle threshold value. In other words, the tilt angle of a local tile must be similar (in the sense of the anger threshold value) to the tilt angle of a neighboring or next-to-neighbor ground surface tile. Considering the orientation or angle of the normal vector has proven to result in a more robust or more reliable ground surface recognition. The angle threshold value can be in a range from 0° to 30°.

The described region growing method may identify several local ties as ground surface ties, but between these identified ground surface tiles, i.e. the region grown area or surface, gaps may remain even though some of the remaining local tiles in these gaps may belong to the ground surface, also. One embodiment therefore comprises that the following step is additionally performed: based on the region grown area that has been determined by the region growing method and based on a predefined interpolation method, in those grid cells which are outside the region grown area (i.e. which are in the gaps) and which additionally have two or three or four ground surface tiles as direct neighbors, for these gird cells a respective new local tile is calculated as a ground surface tile. This additional step allows to identify further local tiles as ground surface tiles even though they might not be identified as such by the region growing algorithm itself. If a local tile has at least two neighboring tiles that have already been identified as being ground surface tiles, this is exploited as a hint or indication that this local tile is also a ground surface tile. For such a local tile, a replacement tile can be calculated as a new tile for that grid cell.

One embodiment comprises that said interpolation method comprises that a height value of the new local tile is set to the minimum z-coordinate of all the measurement points of the respective grid cell. Experiments show that this allows to compensate for a variance or noise in the measurements points.

Once the topology of the ground surface has been identified or reconstructed on the basis of the ground surface tiles (with a possible further extrapolation for those grid cells that do not comprise a ground surface tile), the coordinate system for describing the measurement points can be redefined on the basis of the now known ground surface or ground topology. One embodiment comprises that for some or each of the measurement points a classification is performed, by which the respective measurement point is classified as being a ground surface point if its height value is smaller than a predefined maximum height-above-ground-value. In other words, each measurement point can be described by its height above the ground surface. This is especially beneficial, when the LIDAR sensor is tilted such that the horizontal axis in the coordinate system of the LIDAR sensor is at an angle (un-equal to 0) with regards to the horizontal plane in the environment. The maximum height-above-ground-value can be in the range from 0 cm to 20 cm.

One embodiment comprises that a respective measurement point that is not classified as a ground surface point is instead classified as an object point that indicates a position of an object in the environment. Defining a measurement point as being either a ground surface point or an object point (i.e. an object not being part of the ground surface, like, for example, another vehicle or a static object, like a traffic light), helps speeding up the calculation of a trajectory in an autonomous driving function, as only a binary decision is provided or prepared for verifying the validity of the trajectory (i.e. a trajectory that does not cause a collision with an object as it does not touch any object point).

Accordingly, one embodiment comprises that a driving trajectory of the motor vehicle is planned that is positioned exclusively on ground surface tiles and the motor vehicle is driven according to the trajectory by an autonomous driving function. The driving of the vehicle can be performed by a driving actuator that may perform the steering and accelerating (increasing and decreasing of driving speed) in an automated fashion while it is controlled by the trajectory data of the trajectory.

The invention also provides a processing unit for a vehicle. The processing unit comprises a least one processor and a data storage that is coupled to the at least one processor. The data storage comprises computer readable processing instructions that are designed to cause the at least one processor to perform an embodiment of the inventive method when executed by the at least one processor. The processing unit can be designed as an electronic control unit or a network comprising several such control units. The processing unit may be coupled to said driving actuator for controlling the vehicle on the basis of the described autonomous driving function. As an input to the autonomous driving function, surface data describing the reconstructed ground surface and/or the measurement points with their height values defined on the basis of the reconstructed ground surface and/or with their classification information (ground surface point or object point).

The invention also provides a motor vehicle comprising at least one LIDAR sensor and an embodiment of the inventive processing unit. The processing unit is coupled to the at least one LIDAR sensor for receiving scan data describing measurement points from the at least one LIDAR sensor. An autonomous driving function of the motor vehicle may function robustly as the ground surface may be reconstructed based on the described method even if the LIDAR sensor is in a tilted position (as compared to its original or intended position. The motor vehicle may be designed as a passenger vehicle or a truck.

The invention also comprises the combinations of the features of the different embodiments.

In the following an exemplary implementations of the invention are described. The figures show:
- Fig. 1: a schematic illustration of an embodiment of the inventive motor vehicle;
- Fig. 2: a sketch for illustrating measurement points of an environment of the motor vehicle;
- Fig. 3: a sketch for illustrating a fitting method;
- Fig. 4: a sketch for illustrating a region growing method;
- Fig. 5: a sketch for illustrating an interpolation method and an extrapolation method; and
- Fig. 6: a sketch for illustrating the measurement points after classifying them as either ground surface points or object points.

The embodiments explained in the following is a preferred embodiment of the invention. However, in the embodiments, the described components of the embodiment each represent individual features of the invention which are to be considered independently of each other and which each develop the invention also independently of each other and thereby are also to be regarded as a component of the invention in individual manner or in another than the shown combination. Furthermore, the described embodiments can also be supplemented by further features of the invention already described.

In the figures identical reference signs indicate elements that provide the same function.

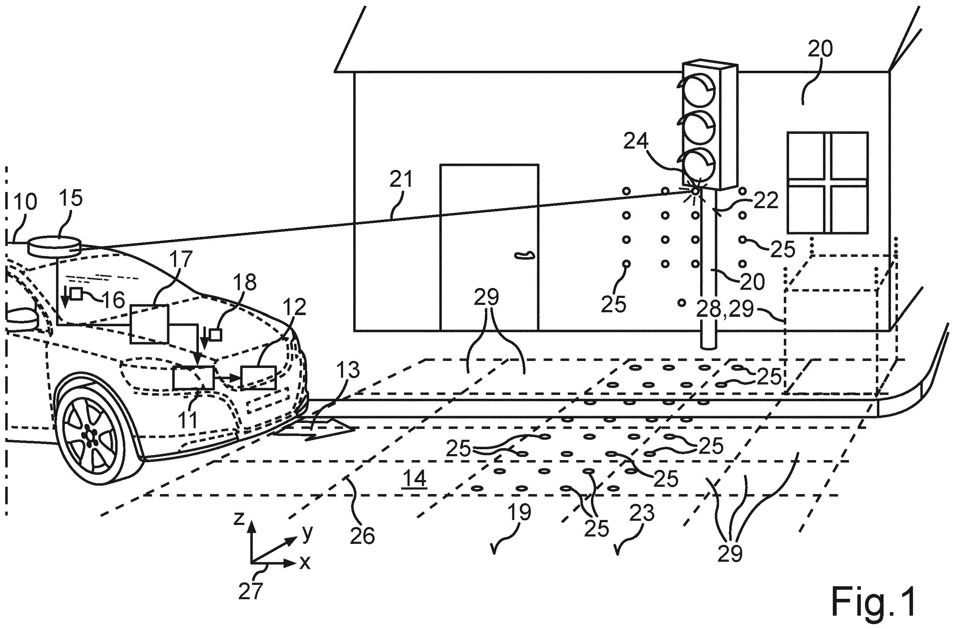

Fig. 1 shows a motor vehicle 10 that may comprise an autonomous driving function 11 for controlling a driving actuator 12 that may drive vehicle 10 along a driving direction 13 through surrounding or an environment 14. For observing the environment, vehicle 10 may comprise at least one sensor 15 that can be a LIDAR sensor. The sensor 15 may provide sensor data or scan data 16 to a processing unit 17. From the scan data 16 the processing unit 17 may derive observation data 18 that may indicate to the autonomous driving function 11 where in the environment 14 a ground surface 19 is located and where in environment 14 at least one object 20 is located.

For detecting the ground surface 19 and/or an object 20, the sensor 15 may generate a beam 21, e.g. a laser beam that may be reflected at a surface 22 of an object 20 or at the ground surface 19. The ground surface 19 may comprise, for example, a road 23 on which the vehicle 10 is driving. For each such reflection 24, a scan data of a respective measurement point 25 result that describes the coordinates where the reflection 24 occurred. In Fig. 1, some exemplary measurement points 25 are illustrated and some of these are provided with reference signs.

In order to generate the environment data 18 from the scan data 16, the processing unit 17 may perform the following method.

A virtual horizontal grid 26 may be defined, based, for example, on an equation or pre-defined grid data. A coordinate system 27 illustrates that the horizontal plane is defined as the x-y-plane. The vertical direction corresponds to the z-direction. By the horizontal virtual grid 26, the environment 14 is divided into grid cells 29 of which some are provided with a reference sign. As no limitation of the grid cell 29 is given along the vertical direction or z-direction, each grid cell 29 constitutes a column or stixel 28. Thus, a grid cell 29 delimits a volume segment in the environment 14. In each or in some of the grid cells 29, one or several of the measurement points 25 are located.

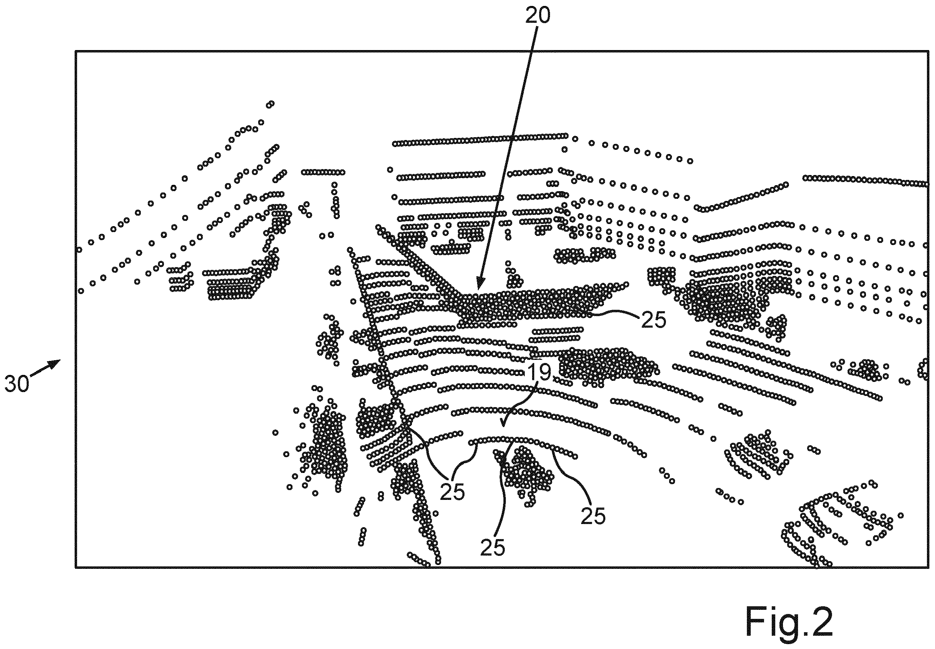

Fig. 2 illustrates which information regarding the ground surface 19 and objects 20 may be obtained from a scan pattern 30 that may be applied by the sensor 15 using, e.g., the beam 21.

However, as it may not be known exactly, how far above the ground surface 19 the sensor 15 is located, it may be difficult to decide, which measurement point 25 belongs to the ground surface 19 and which measurement point 25 belongs to an object.

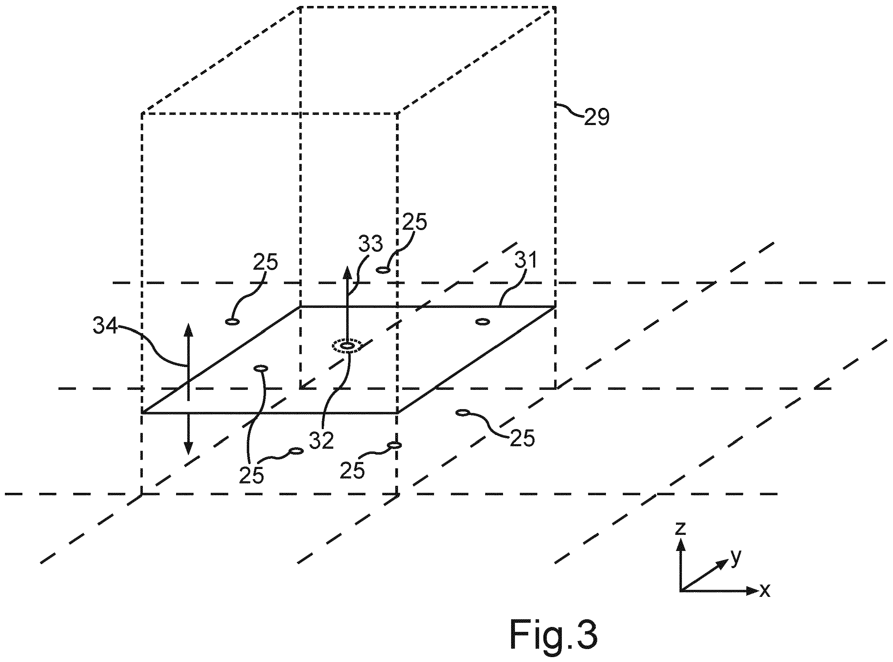

Fig. 3 illustrates, how for each grid cell 29 a local plane or local tile 31 may be defined based on the measurement points 25 located inside that respective grid cell 29. The local tile 31 may be defined by the coordinates of an offset point 32 and a normal vector 33 of the local tile 31. The local tile 31 may be derived from the measurement point 25 on the basis of a fitting method 34, for example a RANSAC-Algorithm.

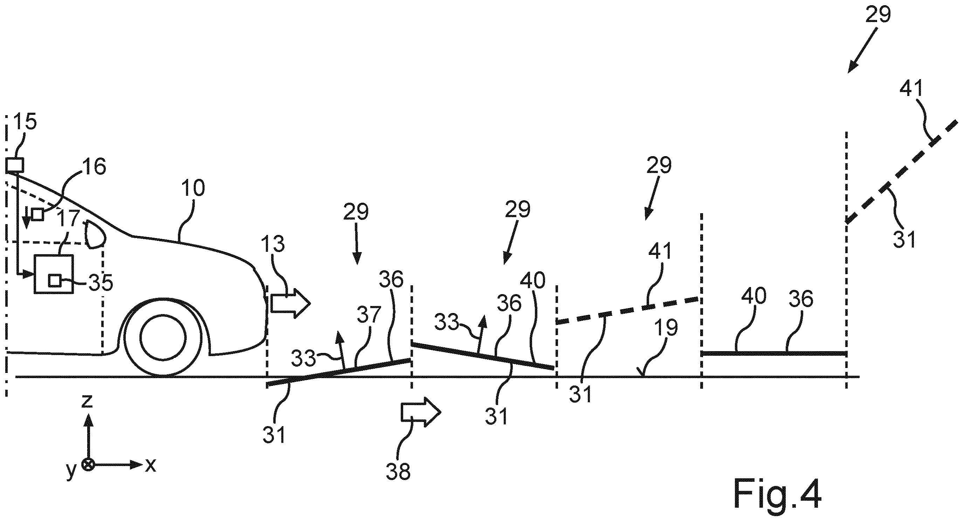

Fig. 4 illustrates as a side view that illustrates how a respective local tile 31 results for each grid cells 29, if measurement points 25 are available in that respective grid cell 29. Based on reference surface data 35 one or some of the local tiles 31 may be identified as a respective ground surface tile 36 belonging to the ground surface 29. The reference surface data 35 may identify an initial local tile 37 as a ground surface tile 36. This initial local tile 37 may be the local tile 31 that is located underneath the vehicle 10 or right in front of the vehicle 10, as it may be assumed that the vehicle 10 is driving over the ground surface 19. Starting from that initial tile 37, a region growing method 38 may be applied that determines further ground surface tiles 36 based on, for example, a height difference of the local tiles 31 (e.g. the height difference of adjacent edges or the offset points 32) and/or an angle difference between the normal vectors 33 of the local tiles 31. Fig. 4 illustrates that two further tiles 40 might have been identified as a ground surface tile 36, whereas other local tiles 41 are not identifies as ground surface tiles 36.

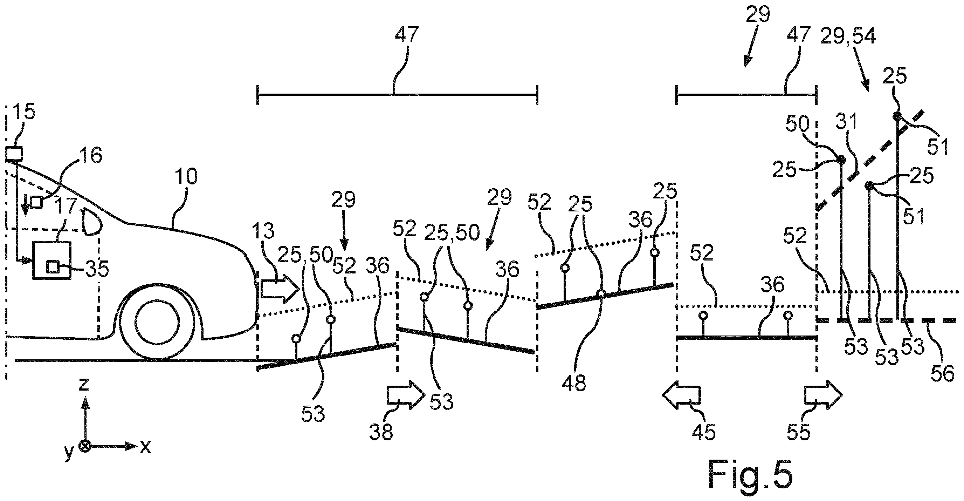

Fig. 5 illustrates, how a further analysis might reveal further local tiles 31 as being ground surface tiles 36. An interpolation method 45 may comprise that if a tile 46 is between tow ground surface tiles 36 as they result from the region growing method 38 (see tiles 40 from Fig. 4), i.e. that are part of the region grown area 47, such a local tile 46 may also become a ground surface tile by setting its height value or z-coordinate to the z-coordinate of the lowest measurement point 48.

Fig. 5 also illustrates, how for each measurement point 25 it may be decided, whether that measurement point 25 is a ground surface point 50 or an object point 51. An object point 51 is not part of the ground surface 19, but instead it is part of an object 20. For that classification, a maximum height-above-ground-value 52 may be defined and if a height value 53 of a measurement point 25 above the ground surface tile 36 is less than this maximum height-above-ground-value 52, a measurement point 25 is classified as ground surface point 50. For a grid cell 54 that comprises a local tile 31 which is not a ground surface tile 36, an extrapolation method 55 may be applied to derive a virtual ground surface 56 for defining height values 53 for the measurement points 25 in that grid cell 54.

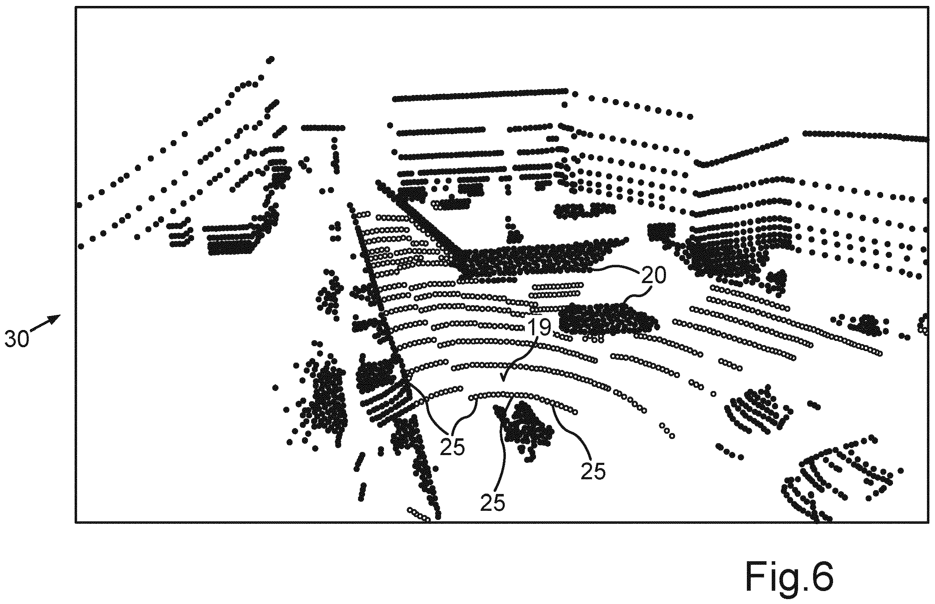

Fig. 6 illustrates, how the classified measurement points may give information where the ground surface 19 is located and where objects 20 are located.

The method hereby described therefore attempts to reconstruct the surface topology of the environment based on LIDAR scans and thus allowing to reference scans to said surface. It does so by the following pipeline:
1. Divide the "world" (surroundings) into a grid
2. Fit each grid cell to a plane, using a plane or tile fitting method
3. Classifying individual cells as belonging to a ground surface, through region growing
4. Interpolating cells which do not belong to region grown area
5. Calculate distance of measurement points based on the local cell plane(s) or tile(s).

For step 1, we perform several corrections to LIDAR scans to improve quality. We account for vehicle motion and compensate for this. We also account for vehicle pose.

For step 2, we use RANSAC plane fitting. Additionally we calculate point surface normal (e.g. a vector perpendicular to the surface), and add this to the RANSAC error as a regularizing term, in order to favor specific plane orientations.

For step 3, we use simple connectivity criteria, such as maximum inclination between neighboring cells (within a parameter radius), and maximum elevation step between cells, in order to decide whether these cells are connected. We logically start the region growing from the cell where the vehicle currently is positioned.

For step 4, we use a weighted linear interpolation between all ground cells to individual cells to be interpolated.

For step 5, we evaluate the minimum distance of a point to its closest neighboring planes, the number is a parameter. We use the elevation based on the smallest unsigned distance.

The algorithm is effectively implemented using parallel computation accelerators, which is beneficial for real-time applications. The algorithm can function on single LIDAR scans, multiple LIDAR scans from the same time instance, or multiple LIDAR scans from temporally different times (aggregated in a single reference frame). It allows to explicitly model ground surface topology, as opposed to simply classifying sparse points in a scan.

In the context of autonomous driving, we can trigger this ground surface reconstruction every time we receive a LIDAR scan from a sensor.

Ground surface reconstruction is a key perception task which is useful for a number of corollary tasks, such as object detection, lane detection, mapping and planning.

Overall, the example shows how a method for reconstructing the surface topology of the environment based on LIDAR scans can be provided.

## Claims

1. Method for reconstructing the surface topology of a ground surface (19) in an environment (14) of a motor vehicle (10), wherein the reconstruction is based on scan data (16) of at least one LIDAR sensor (15) and wherein the scan data (16) describe measurement points (25) of the environment (14) and wherein a processing unit (17) performs the following steps:
- a virtual horizontal grid (26) is defined for dividing the environment (14) into distinct grid cells;
- in each grid cell (29), a local tile (31) is defined as a function of coordinates of those measurement points (25) that are contained in the respective grid cell (29) using a predefined tile fitting method;
- the respective local tile (31) of each individual grid cell (29) is classified as belonging to the ground surface (19) based on a predefined region growing method (38) that is started based on reference surface data (35) that identifies the respective local tile (31) of at least one grid cell as a ground surface (19) tile belonging to the ground surface (19) and that identifies at least one further local tile (31) as a ground surface (19) tile;
- for one or some or each of the grid cells (29), a respective height value (53) of the measurement points (25) in the respective grid cell (29) is re-calculated as being the vertical distance of the respective measurement point (25) above the ground surface (19) as it is defined by the identified ground surface (19) tiles.

2. Method according to claim 1, wherein the predefined tile fitting method (34) is based on a Least-Mean-Square-Fitting of the z-values of the measurement points (25) contained in the grid cell, and/or the predefined tile fitting method (34) is based on a RANSAC-algorithm.

3. Method according to any of the preceding claims, wherein the reference surface data (35) identifies the local tile (31) that the vehicle is standing on as a ground surface (19) tile and/or wherein the reference surface data (35) identifies the local tile (31) that is positioned immediately in front of the vehicle as a ground surface (19) tile.

4. Method according to any of the preceding claims, wherein the predefined region growing method (38) comprises a height criterion that states that a local tile (31) that is a neighbor of a ground surface (19) tile or that is a next-to-neighbor of a ground surface (19) tile is also a surface tile, if a difference of the height of the local tile (31) and the ground surface (19) tile is less than a predefined height threshold value.

5. Method according to any of the preceding claims, wherein the predefined region growing method (38) comprises a directional criterion that states that a local tile (31) that is a neighbor of a ground surface (19) tile or that is a next-to-neighbor of a ground surface (19) tile is also a ground surface (19) tile, if an angle difference of the normal vector (33) of the local tile (31) and the ground surface (19) tile is less than a predefined angle threshold value.

6. Method according to any of the preceding claims, wherein the following step is additionally performed: based on the region grown area (47) that has been determined by the region growing method (38) and based on a predefined interpolation method (45), in those grid cells which are outside the region grown area (47) and which have two or three or four cells of the region grown area (47) as neighbors, a respective new local tile (31) is interpolated as a ground surface (19) tile.

7. Method according to claim 6, wherein the interpolation method (45) comprises that a height value (53) of the new local tile (31) is set to the minimum z-coordinate of the measurement points (25) of the respective grid cell.

8. Method according to any of the preceding claims, wherein for some or each of the measurement points (25) a classification is performed, where the respective measurement point (25) is classified as being a ground surface (19) point if its height value (53) is smaller than a predefined maximum height-above-ground-value (52).

9. Method according to claim 8, wherein the respective measurement point (25) that is not classified as a ground surface (19) point is instead classified as an object point that indicates a position of an object (20) in the environment (14).

10. Method according to any of the preceding claims, wherein a driving trajectory of the motor vehicle (10) is planned that is positioned exclusively on ground surface (19) tiles and the motor vehicle (10) is driven according to the trajectory by an autonomous driving function (11).

11. Processing unit for a vehicle, wherein the processing unit (17) comprises a least one processor and a data storage that is coupled to the at least one processor, wherein the data storage comprises computer readable processing instructions that are designed to cause the at least one processor to perform a method according to one of the preceding claims when executed by the at least one processor.

12. Motor vehicle comprising at least one LIDAR sensor (15) and a processing unit (17) according to claim 11, wherein the processing unit (17) is coupled to the at least one LIDAR sensor (15) for receiving scan data (16) describing measurement points (25) from the at least one LIDAR sensor (15).
